# FASCICULE DE BREVET EUROPEEN

(11) **EP 0 887 014 B1**
(45) Date de publication et mention de la délivrance du brevet: **19.02.2003**
(21) Numéro de dépôt: 98401242.7
(22) Date de dépôt: 26.05.1998
(51) Int. Cl.: A01G 9/02, E01F 8/02, E02D 29/02, E04B 2/86

(54) **Dispositif destiné à réaliser un mur horticole**
Anlage zur Herstellung einer Gartenbauwand
Assembly for forming an horticultural wall

(30) Priorité: 27.05.1997 FR 9706575
(43) Date de publication de la demande: 30.12.1998
(73) Titulaire: S.A. FRANCK et Cie, 89460 Cravant (FR)
(72) Inventeur: Hauville, Jean, 89660 Montillot (FR)
(74) Mandataire: Bruder, Michel

(56) Documents cités:
- DE-A- 2 255 810
- FR-A- 2 335 672
- FR-A- 2 505 389
- FR-A- 2 676 486

## Description

Dispositif destiné à réaliser un mur de décoration horticole démontable à partir de parois préfabriquées et de moyens intérieurs de contreventement.

La présente invention concerne un dispositif préfabriqué permettant de réaliser par l'intérieur de son volume une enveloppe capable de retenir les moyens de stabilisation et de culture horticole en utilisant un seul modèle d'élément de contreventement assurant parallélisme et équerrages en conservant l'aspect d'un mur traditionnel sans fondation.

La réalisation habituelle d'un mur exige la préparation d'une assise ou fondation ainsi que du ciment et les matériaux de sa constitution, pierres, briques, parpaings, etc. ... et un savoir-faire professionnel.

Des dispositifs permettant d'éviter de telles difficultés ont été proposés notamment dans le précédent brevet du présent demandeur n° FR-2.676.486 - 91.05879 qui avait pour objet de réaliser un mur floral utilisant des parois pleines juxtaposées dont le contreventement était assuré au niveau de l'assise par des traverses enfoncées dans le sol et dépassant de la largeur du mur ; l'assemblage entre panneaux en bout à bout étant assuré d'une part par des traverses traversant les parois et clavetées à l'extérieur et à l'intérieur du mur et d'autre part des panneaux dont le bord vertical était à chaque extrémité replié pour être traversé par des traverses sortant de la largeur du mur pour y être clavetées sur chacune de ses extrémités contre l'extérieur de la paroi et contre l'intérieur du contreventement en assurant l'équerrage du mur mais provoquant ainsi sur les faces extérieures du mur des saillies gênantes et dangereuses pour le passage des gens.

On connaît également par le brevet français FR 2.505.389 un mur pour constructions légères caractérisé en ce qu'il est constitué de deux rangées opposées de panneaux de faible épaisseur rendues solidaire face à face par des moyens de liaison ne laissant rien apparaître du côté extérieur des panneaux et dont l'espace qui les sépare est comblé par de la terre.

Ce dispositif comporte des entretoises venant se loger dans des brochages attenant aux murs se faisant face afin de réaliser leur juste écartement. Ces entretoises coopèrent avec des brides solidaires des murs verticaux comportant les brochages dans lesquels viennent s'insérer les extrémités recourbées desdites entretoises ; si l'écartement est de cette manière parfaitement obtenu, il est évident qu'il n'y a aucune rigidité verticale entre l'extrémité de l'entretoise et son étrier de blocage avec la conséquence qu'au moins un des murs doit être monté vertical assurant ainsi à l'autre sa verticalité par le placement d'une ou plusieurs entretoises horizontales. Ce dispositif ne procure donc aucun assemblage du type contreventement, équerrage, parallélisme ou triangulation entre les panneaux formant le mur horticole.

Le dispositif selon l'invention permet d'éviter ces inconvénients en utilisant un moyen d'assemblage ne comportant aucune aspérité extérieure en utilisant un moyen de liaison ayant ses extrémités recourbées à 90° formant brochage intérieur pour assurer l'ensemble des besoins de contreventement, d'équerrage, d'entretoisement, de parallélisme et de triangulation.

Ainsi, l'invention vise un dispositif pour réaliser un mur horticole préfabriqué et démontable du type constitué d'une enveloppe sans fond reposant sur le sol et formée de panneaux préfabriqués assemblés par des moyens de contreventement et d'écartement répartis permettant d'intégrer des éléments horticoles de plantation caractérisé en ce que les moyens de contreventement sont constitués d'entretoises présentant des extrémités recourbées à 90° destinées à venir se fixer par brochage dans des moyens de réception disposés en saillie sur le côté intérieur des panneaux et pourvus d'un trou disposé ou constitué de façon à maintenir l'équerrage prévu entre les parois intérieures des panneaux de sorte que la combinaison des extrémités en équerre et des trous de maintien assure parallélisme et équerrage des panneaux.

Selon d'autres particularités les entretoises sont filiformes sous forme d'une tige rigide recourbée à 90° sur ses extrémités. Les moyens de réception de l'entretoise sont constitués de goujons rapportés, percés d'un trou transversal au diamètre des entretoises filiformes. Les extrémités des entretoises sont coupées en biseau pour en faciliter l'introduction, la face la plus longue étant contre la face intérieure des panneaux. Le trou transversal prévu sur le goujon est disposé de sorte à être tangent sur son diamètre extérieur à la surface intérieure des panneaux de sorte à assurer aux parties verticales recourbées de l'entretoise la fonction de contreventement en prenant appui directement par leur côté extérieur sur la face intérieure des parois. Le dispositif comporte à la base des panneaux, des goujons à tête fraisée simple sans ergot permettant la réception d'entretoises filiformes mises en place par le dessus puis pivotées de 180° au niveau de leur portée verticale recourbée dans le goujon formant pivot de sorte à constituer une traverse d'embase s'appuyant sur le sol et recevant le lest horticole pour assurer l'assise du mur horticole grâce à un positionnement correspondant des goujons.

Selon l'un des modes particuliers de réalisation le dispositif d'assemblage des panneaux sera constitué d'une entretoise filiforme en tige ronde aux extrémités recourbées à 90° pour réaliser le brochage intérieur des parois, de sorte qu'elles soient invisibles de l'extérieur en se clavetant sur des moyens de réception immobilisés dans l'épaisseur des panneaux formant l'enveloppe et possédant sur le pourtour de leur tête fraisée une saillie anti-rotative destinée à maintenir les extrémités recourbées de l'entretoise en position verticale contre l'intérieur des parois de l'enveloppe pour en assurer par contreventement les moyens d'écartement, de parallélisme, d'équerrage et de triangulation, le moyen de réception rapporté prenant appui sur l'extérieur des trous fraisés des panneaux pour recevoir, sur son extrémité percée d'un trou approprié aux besoins de l'assemblage et après avoir traversé l'épaisseur du panneau, le brochage des extrémités pointues des entretoises filiformes ou de la goupille simple pour d'autre assemblage. L'entretoisement formant contreventement assurant également l'hypoténuse de triangulation des panneaux d'angle dans toutes les formes géométriques proposées pour réaliser les formations architecturales souhaitées, le corps de l'enveloppe murale ainsi constitué reçoit à sa base des matériaux hétérogènes reposant sur les entretoises renversées pour être complété de terre horticole en proportion des besoins de la plantation, la masse de remplissage formant lest et assurant par chaque entretoise filiforme et sur les entretoises renversées de la base, une pesée sur l'ensemble du dispositif assurant par l'ossature ainsi constituée, son maintien et son assise directe sur le sol.

Les dessins annexés illustrent l'invention :

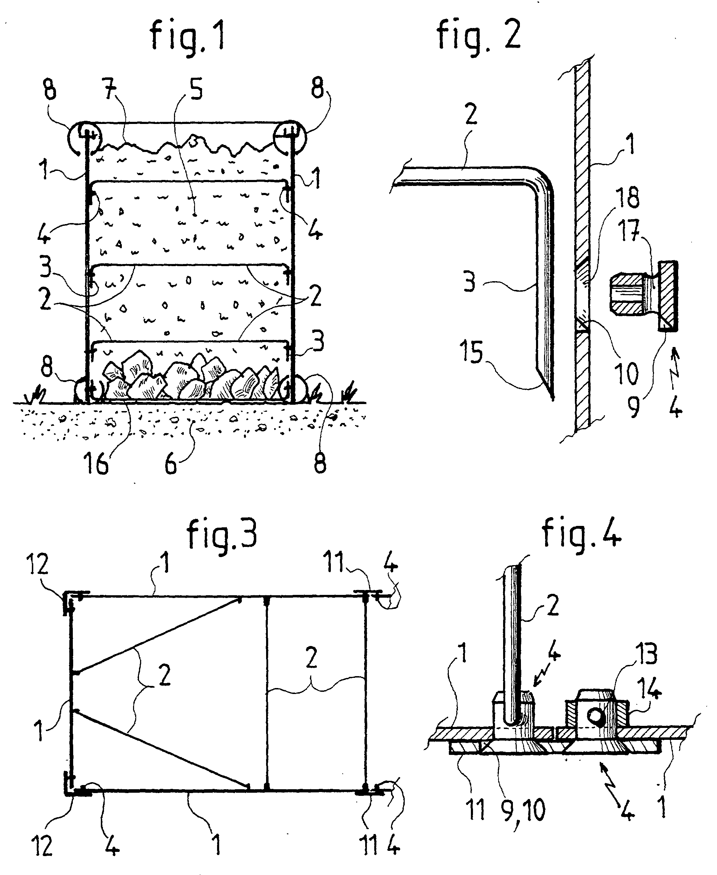

- la figure 1 représentent une coupe transversale du dispositif,
- la figure 2 représente une coupe éclatée agrandie du dispositif de fixation des entretoises,
- la figure 3 représente les différentes positions prises par le dispositif de fixation pour entretoises,
- la figure 4 représente une coupe du goujon utilisé avec une entretoise et un couvre joint.

En référence à ces dessins, le dispositif comporte une enveloppe sans fond constituée sur son périmètre de parois préfabriquées 1 reposant directement sur le sol 6 assemblées par des entretoises 2, communes aux moyens d'entretoisement, et filiformes sous forme d'une tige recourbée à 90° sur ses deux extrémités 3, assurant par le poids de la masse horticole 5 sur des entretoises 2 en position retournée 16 reposant directement sur le sol 6, l'assise du mur horticole sans fondation. Les moyens de réception des entretoises 2 sont constitués de goujons rapportés 4 percés d'un trou 17 au diamètre des extrémités des entretoises filiformes 2 ou des goupilles 13 pour former également le moyen de liaison entre panneaux successifs par les couvre-joints 11 et des cornières d'angle 12 à l'aide d'une bague de blocage 14 s'épaulant sur la paroi ou à l'aide d'une goupille 13, soit à l'aide des entretoises 2 constituant le moyen de brochage intérieur des panneaux 1 par leurs extrémités recourbées 3 à 90° et coupées en biseau 15 pour pénétrer dans le trou du goujon 4 assurant par sa partie recourbée 3 à 90° les moyens de contreventement de parallélisme et de triangulation des parois perpendiculaires et d'équerrage en s'appuyant sur la face intérieure des parois 1. Le goujon 4 comporte sur le périmètre du trou 18 un fraisage recevant un ergot anti-rotatif 9 destiné, en pénétrant dans la lumière 10 prévue en périphérie des orifices 18 tronconiques des panneaux 1, à maintenir les extrémités 3 de l'entretoise 2 en position verticale de contreventement.

Un profil décoratif 8 vient couronner la partie haute de l'enveloppe 1 en s'engageant sur celle-ci par la fente ou rainure 16. La masse horticole remplissant l'enveloppe du mur horticole 1 se compose à sa base d'un lest hétérogène 5 reposant sur les entretoises 16 en contact direct avec le sol 6 pour en assurer l'assise et elle se termine en une couche de terre horticole 7 recevant la plantation du mur horticole reconvertible.

En variante, des goujons 4, des dispositifs avec évidement tubulaire long pour permettre le maintien du parallélisme, peuvent être prévus et, dans ce cas ils ne sont plus directement disposés de façon tangente à la face intérieure de la paroi 1.

Le dispositif objet de l'invention, étant préfabriqué et conditionné pour être aisément transporté et mis en oeuvre, concerne l'aménagement de l'espace paysagé public et privé, la séparation de propriété, la réalisation de jardinières adaptées à la dimension des terrasses, balcons etc...

## Revendications

1. Dispositif pour réaliser un mur horticole préfabriqué et démontable du type constitué d'une enveloppe sans fond reposant sur le sol et formée de panneaux (1) préfabriqués assemblés par des moyens de contreventement et d'écartement répartis, permettant d'intégrer des éléments horticoles de plantation, les moyens de contreventement et d'écartement étant constitués d'une entretoise (2) filiforme sous forme d'une tige rigide présentant des extrémités recourbées (3) à 90° destinées à venir se fixer par brochage dans un goujon (4) traversant le panneau (1) de telle sorte que sa tige venant en saillie sur la face intérieure dudit panneau (1) soit percée d'un trou transversal (17) au diamètre des extrémités de l'entretoise filiforme (2), ledit trou (17) étant disposé de sorte à être tangent sur son diamètre extérieur à la surface intérieure du panneau (1) pour assurer aux parties verticales recourbées (3) de l'entretoise (2) la fonction de contreventement en prenant appui directement par leur côté extérieur sur la face intérieure des panneaux (1), les extrémités (3) de l'entretoise (2) étant coupées en biseau (15) pour faciliter leur introduction dans les trous (17) et pour prendre appui par la face extérieure la plus longue contre la face intérieure des panneaux (1), assurant ainsi le maintien du parralélisme des panneaux (1).

2. Dispositif selon la revendication 1 **caractérisé en ce que** les goujons (4) comportent une tête fraisée munie d'un moyen anti-rotatif formé d'un ergot (9) d'immobilisation pour l'entretoise (2) pénétrant dans une lumière (10) pratiquée dans le panneau (1) et sur le rebord du trou fraisé (18) de sorte à maintenir les extrémités (3) de l'entretoise (2) en position verticale de contreventement.

3. Dispositif selon l'une des revendications 1 ou 2 **caractérisé en ce que** l'entretoise filiforme (2) est de section circulaire de sorte qu'elle puisse également être reçue dans des goujons (4) sur des panneaux (1) placés perpendiculairement en extrémité de mur en formant une triangulation par une position d'hypoténuse fermant chaque angle.

4. Dispositif selon l'une des revendications 1 à 3 **caractérisé en ce qu'**il comporte en outre au niveau de la jonction des panneaux (1) des couvre-joints plans (11) et/ou en angle (12) de largeur inférieure à la hauteur des panneaux, percés de trous (18) répartis verticalement et disposés de part et d'autre de la ligne de séparation des panneaux (1) recevant des goujons (4) percés transversalement à une distance de la tête correspondant à l'épaisseur des parois et couvre-joints du mur pour recevoir l'extrémité verticale d'une entretoise ou d'une simple goupille (13) pour opérer l'assemblage des extrémités de l'entretoise (2) et/ou, à l'aide d'une bague (14), procurer un blocage contre la paroi (1).

5. Dispositif selon l'une quelconque des revendications précédentes du type comportant en outre un profil décoratif supérieur **caractérisé en ce que** ce profil décoratif (8) comporte intérieurement une rainure (16) destinée en s'engageant sur la partie haute des panneaux (1) sur le périmètre des panneaux (1) à en maintenir la rectitude autour de la surface de plantation (7).

## Patentansprüche

1. Vorrichtung zur Herstellung einer vorgefertigten und demontierbaren Gartenmauer von der Art, bestehend aus einer Hülle ohne Boden, die auf dem Erdboden ruht und von vorgefertigten Paneelen (1) gebildet wird, welche mittels verteilter Windverstrebungs- und Distanzeinrichtungen zusammengebaut werden, wobei es möglich ist, Gartenbepflanzungselemente zu integrieren, wobei die Windverstrebungs- und Distanzeinrichtungen aus einer drahtförmigen Verstrebung (2) in Form einer steifen Stange bestehen, die um 90° umgebogene Enden (3) aufweist, welche dazu bestimmt sind, durch Einstecken in einen Bolzen (4) befestigt zu werden, der das Paneel (1) derart durchsetzt, dass sein auf der Innenseite des Paneels (1) überstehender Schaft von einem quer verlaufenden Loch (17) mit dem Durchmesser der Enden der drahtförmigen Verstrebung (2) durchsetzt wird, wobei das Loch (17) so angeordnet ist, dass es an seinem Außendurchmesser die Innenseite des Paneels (1) tangiert, um für die vertikalen umgebogenen Teile (3) der Verstrebung (2) die Windverstrebungsfunktion unter direkter Abstützung mit ihrer Außenseite auf der Innenseite des Paneels (1) sicherzustellen, wobei die Enden (3) der Verstrebung (2) schräg (15) zugeschnitten sind, um ihr Einführen in die Löcher (17) zu erleichtern und um sich mit der längsten Außenseite gegen die Innenseite der Paneele (1) abzustützen, wobei sie so die Aufrechterhaltung der Parallelität der Paneele (1) sicherstellen.

2. Vorrichtung nach Anspruch 1, **dadurch gekennzeichnet, dass** die Bolzen (4) einen gefrästen Kopf aufweisen, der mit einer Drehverhütungseinrichtung versehen ist, die von einem Arretiervorsprung (9) für die Verstrebung (2) versehen ist, der in eine in das Paneel (1) und am Rand des gefrästen Lochs (18) eingebrachte Einführöffnung (10) eindringt, so dass die Enden (3) der Verstrebung (2) in vertikaler Windverstrebungsposition gehalten werden.

3. Vorrichtung nach einem der Ansprüche 1 oder 2, **dadurch gekennzeichnet, dass** die drahtförmige Verstrebung (2) von kreisförmigem Querschnitt ist, so dass sie auch in Bolzen (4) auf senkrecht am Mauerende angebrachten Paneelen (1) aufgenommen werden kann, unter Bildung einer Dreiecksaufnahme durch eine jeden Winkel schließende Hypothenusenposition.

4. Vorrichtung nach einem der Ansprüche 1 bis 3, **dadurch gekennzeichnet, dass** sie außerdem in Höhe der Verbindung der Paneele (1) ebene und/oder abgewinkelte Abdeckleisten (11)(12) mit einer Breite aufweist, die kleiner als die Höhe der Paneele ist, welche von vertikal verteilten und beiderseits der Trennungslinie der Paneele (1) angeordneten Löchern (18) durchsetzt werden, die Bolzen (4) aufnehmen, welche in einem der Dicke der Wände und Abdeckleisten der Mauer entsprechenden Abstand vom Kopf quer durchbohrt sind, um das vertikale Ende einer Verstrebung oder eines einfachen Stifts (13) aufzunehmen, um die Montage der Enden der Verstrebung (2) zu bewirken und/oder mit Hilfe eines Rings (14) eine Blockierung gegen die Wand (1) anliegend zu verursachen.

5. Vorrichtung nach einem der vorangehenden Ansprüche, von der Art, die außerdem ein oberes dekoratives Profil aufweist, **dadurch gekennzeichnet, dass** dieses dekorative Profil (8) im Inneren eine Nut (16) aufweist, die dazu bestimmt ist, auf dem Umfang der Paneele (1) mit dem Oberteil der Paneele (1) in Eingriff zu treten, um dort um die Pflanzfläche (7) herum die Geradheit zu bewahren.

## Claims

1. Device for forming a prefabricated and dismountable horticultural wall of the type constituted by a bottomless envelope resting on the ground and formed by prefabricated panels (1) assembled by distributed cross-bracing and spacing means, making it possible to integrate horticultural plant elements, the cross-bracing and spacing means being constituted by a filiform strut (2) in the form of a rigid rod presenting ends (3) curved at 90° intended to be fixed in a pin (4) traversing the panel (1) so that the shank thereof projecting on the inner face of said panel (1) is pierced with a hole (17) transverse with respect to the diameter of the ends of the filiform strut (2), said hole (17) being arranged so as to be tangential on its outer diameter to the inner surface of the panel (1) to ensure for the curved vertical parts (3) of the strut (2) the function of cross-bracing by abutting directly by their outer side on the inner face of the panels (1), the ends (3) of the strut (2) being bevelled (15) in order to facilitate their introduction in the holes (17) and to abut by the longest outer face against the inner face of the panels (1), thus ensuring maintenance of the parallelism of the panels (1).

2. Device according to Claim 1, **characterized in that** the pins (4) comprise a countersunk head provided with an anti-rotation means formed by an immobilization catch (9) for the strut (2) penetrating in a hole (10) made in the panel (1) and on the raised edge of the countersunk hole (18) so as to maintain the ends (3) of the strut (2) in vertical cross-bracing position.

3. Device according to one of Claims 1 or 2, **characterized in that** the filiform strut (2) is of circular section, with the result that it can also be received in pins (4) on panels (1) placed perpendicularly at the wall end, forming a triangulation by a position of hypotenuse closing each angle.

4. Device according to one of Claims 1 to 3, **characterized in that** it further comprises, at the level of the join of the panels (1), junction plates which are planar (11) and/or angled (12), of width shorter than the height of the panels, pierced with holes (18) distributed vertically and arranged on either side of the line of separation of the panels (1) receiving pins (4) pierced transversely at a distance from the head corresponding to the thickness of the walls and junction plates of the wall in order to receive the vertical end of a strut or a simple pin (13) to effect assembly of the ends of the strut (2) and/or, with the aid of a ring (14), to procure a blockage against the wall (1).

5. Device according to any one of the preceding Claims of the type further comprising an upper decorative profile section, **characterized in that** this decorative profile section (8) internally comprises a groove (16) intended, by engaging on the upper part of the panels (1) on the perimeter of the panels (1), to maintain the straightness thereof around the plantation surface (7).
